# EUROPEAN PATENT SPECIFICATION

(11) **EP 2 158 417 B1**
(45) Date of publication and mention of the grant of the patent: **22.09.2010**
(21) Application number: 08750962.6
(22) Date of filing: 16.05.2008
(51) Int. Cl.: F16H 47/04, F16H 37/08, F16H 57/02

(54) **VEHICLE TRANSMISSION**
FAHRZEUGGETRIEBE
TRANSMISSION DE VEHICULE

(30) Priority: 19.05.2007 GB 0709635
(43) Date of publication of application: 03.03.2010
(73) Proprietor: Valtra Inc, 44201 Suolahti (FI)
(72) Inventor: RUOKOLA, Timo, FIN-40520 Jyväskylä (FI)
(74) Representative: Morrall, Roger
(86) International application number: PCT/IB2008/001223
(87) International publication number: WO 2008/142524

(56) References cited:
- DE-B3- 10 310 549
- FR-A- 2 482 692
- US-A- 3 364 790
- US-A- 3 489 035
- US-A- 5 496 223
- US-A1- 2007 042 856

## Description

This invention relates to transmissions and in particular to so-called Continuously Variable Transmissions (CVTs) in which the operative ratio of the transmission can be varied continuously as opposed to being variable in a series of discrete steps. US-A-3 364 790constitutes the closest priort art to the subject-matter of independent claim 1.

It is an object of the present invention to provide a simple and efficient form of CVT.

Thus according to the present invention there is provided a vehicle CVT having the following elements:-
an input shaft;
an epicyclic having three compound planets which co-rotate in unison at all times, two planets acting as inputs to the epicyclic and engaging respective sun gears on the input shaft and the third planet acting as the output and engaging a respective sun gear on an output shaft of the epicyclic;
two hydraulically operated clutches which are alternatively engageable to drive the input planets via their respective sun from the input shaft, and
a drive connection between a carrier for the planets and the input shaft, said connection driving the carrier from the input shaft in a continuously variable manner to provide a CVT.

The output shaft of the epicyclic is preferably connected with a forward/reverse shuttle stage of the transmission in which forward or reverse drive is selected by hydraulically operated forward and reverse drive clutches.

Further selectively engageable gear trains are also preferably driven from the power shuttle stage of the transmission.

With such a CVT the continuous variation of ratio extends from a geared neutral condition in which the output shaft from the epicyclic is not rotating up to a ratio of the order of 2.2:1. The forward and reverse capability is provided by the shuttle stage and the total range of the overall transmission is extended by the further selectively engageable gear trains.

Typically the further selectively engageable gear trains provide two ratios high and low. A further even lower ratio can be provided if desired and a capability may also be provided to drive a power-take off shaft of the vehicle at a speed proportional to the ground speed of the vehicle.

When the vehicle is a tractor or other four wheel drive vehicle the further selectively engageable gear trains may drive a rear axle of the vehicle and a front axle of the vehicle via a front wheel drive clutch.

The power take-off shaft may also be driven directly from the input shaft via a power take-off clutch. The power take-off preferably includes gear trains to drive the power take-off shaft at the industry standard 1000rpm or 540rpm.

The continuous variable connection may be a pump/motor circuit, a variable ratio mechanical drive, or a variable ratio electrical generator/motor combination for example.

In a preferred embodiment, the CVT has a high-torque mode of operation in which said two hydraulically operated clutches are simultaneously engaged and the continuously variable drive connection is allowed to rotate freely. Advantageously, by effectively locking two of the epicyclic inputs together the input and output shafts rotate in unison. This delivers a highly efficient driveline which is suitable for high torque applications.

The present invention will now be described, by way of example only, with reference to the accompanying drawings in which :-
Figure 1 shows diagrammatically the layout of a CVT form of a modular transmission in accordance with the present invention;
Figure 2 is a schematic perspective view of a transmission module in a CVT arrangement in accordance with the present invention shown with the universal end flange removed;
Figure 3 is a sectional view of the universal end flange of the module of Figure 2;
Figure 4 shows diagrammatically the transmission of Figure 1 modified into a five speed power shift transmission;
Figure 5 is a schematic perspective view of a transmission module in a multi-ratio powershift transmission arrangement shown with the universal end flange removed;
Figure 6 is a sectional view of the universal end flange of the module of Figure 5;
Figure 7 shows a tabular summary of the engagement sequence of the clutches of the epicyclic powershift unit of Figure 4;
Figure 8 shows diagrammatically the transmission of Figure 1 modified into a seven speed epicyclic powershift transmission;
Figure 9 shows a tabular summary of the engagement sequence of the clutches of the epicyclic powershift unit of Figure 8;
Figure 10 shows diagrammatically the transmission of Figure 1 modified into a nine speed epicyclic powershift transmission;
Figure 11 shows a tabular summary of the engagement sequence of the clutches of the epicyclic powershift unit of Figure 10;
Figure 12 shows a different form of epicyclic gear operating as a CVT;
Figure 13 shows the transmission of Figure 12 modified into a powershift unit; and,
Figure 14 shows yet another different form of epicyclic gear operating as a CVT.

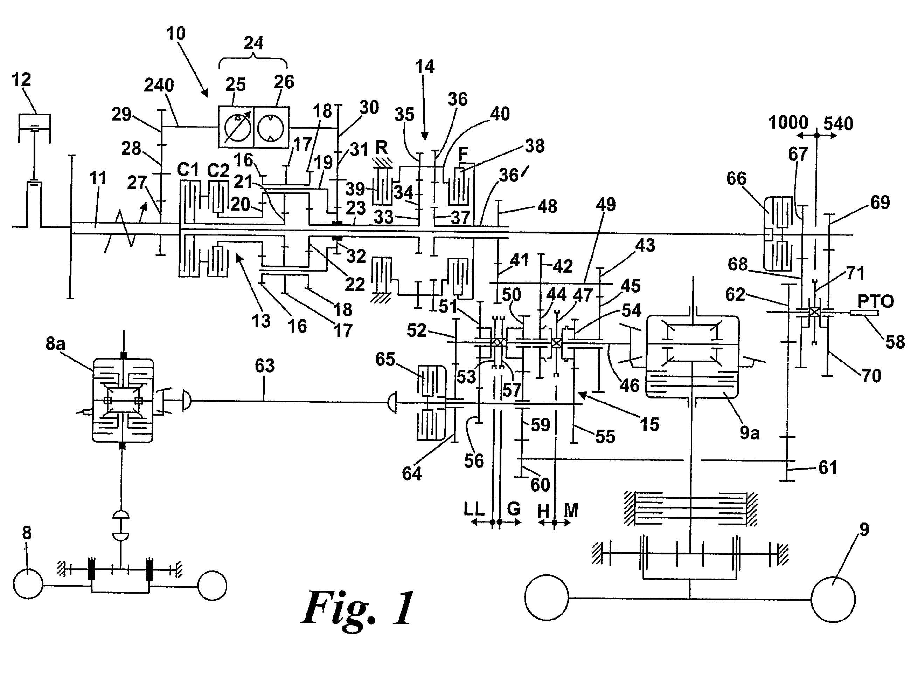

Referring to Figure 1, a power-branched transmission module 10 of a tractor has an input shaft 11 driven from an engine 12. The input shaft drives an epicyclic gear 13, a forward/reverse shuttle stage 14 and an further selectively engageable gear train 15 all in series. Gear train 15 in turn drives the front and rear wheels 8 and 9 via differentials 8a and 9a respectively.

The epicyclic gear 13 has three compound planets gears 16, 17, and 18 which rotate in unison at all times and are supported from a common carrier 19. Planets 16 and 17 engage sun gears 20 and 21 respectively which can be coupled with input shaft 11 via clutches C2 and C1 respectively. The third planet gear 18 engages a sun gear 22 mounted on an output shaft 23 of the epicyclic gear which is connected with the shuttle stage 14.

A hydraulic pump/motor loop 24, which includes a variable displacement pump 25 connected with a motor 26, drives the planet carrier 19 from the input shaft 11 via gears 27, 28, 29, 30, 31, 32. The pump 25 is mounted on a shaft 240 which is driven by gear 29 mounted thereto.

The epicyclic gear 13 is designed to provide a continuous variation of ratio from a geared neutral condition in which the output shaft 23 is not rotating up to a ratio of say 2.2 :1 or 2.6:1 as follows.

Initially clutch C1 is engaged which drives sun 21 from the input shaft 11 and the carrier is driven by the pump/motor loop 24 at speeds varying from the maximum negative speed of rotation of the carrier (i.e. with the carrier rotating at its maximum speed in the opposite direction to the direction of rotation of the engine), when the geared neutral condition exists, up to the maximum positive speed of the carrier (i.e. with the carrier rotating at its maximum speed in the same direction as the engine). This provides a ratio range of 0 to 1.

The clutch C2 is then engaged which drives sun 20 from the input shaft 11 and carrier 19 is driven by the pump/motor loop 24 from the maximum positive speed of rotation of the carrier to the maximum negative speed of rotation of the carrier. This provides the ratio range of 1 to 2.2.

The epicyclic forward/reverse shuttle 14 has a sun gear 33 on shaft 23 and a sun gear 37 on the output shaft 36'. Planet gears 35 and 36 are mounted on a carrier 40 and a reverse idler 34 connects gears 33 and 35. Gears 36 and 37 also mesh without the use of an idler. Forward drive is engaged by engaging clutch 38 which locks the carrier 40 to the shaft 36'. Reverse is engaged by engaging clutch 39 which locks the carrier 40 to the transmission housing.

Shaft 36' drives the further gear train 15 which is configured to give the required overall ratio range of the tractor. In the arrangement shown gears 41, 42, and 43 rotate with a shaft 49. Gear 41 meshes with gear 48 on shaft 36' to drive shaft 49 and gears 42 and 43 mesh with gears 44 and 45 and can be coupled to a differential pinion shaft 46 by a sliding coupler 47 (see arrow H) to provide a high gear train to shaft 46 via gears 42 and 44, which is used principally for road work and a low gear train (see arrow M) via gears 43 and 45 which provides maximum tractive force and is used principally for field work.

Gears 50 and 51 also surround shaft 46. Gear 51 can be coupled to shaft 46 (see arrow LL) using sliding coupler 53 to engage an even lower gear train via gears 43, 45, 54, 55, 56, and 51. If sliding coupler 57 is used to couple gear 50 to shaft 46 (see arrow G) the PTO shaft 58 is driven via gear train 50, 59, 60, 61 and 62 at a speed proportional to the ground speed of the tractor.

Gear 52 on shaft 46 drives the front wheel drive shaft 63 via gear 64 and front wheel drive clutch 65.

PTO shaft 58 can be driven from the input shaft 11 via a hydraulic clutch 66 and either gear train 67, 68 or 69, 70 using sliding coupler 71. Gear train 67, 68 gives a PTO shaft speed of 1000 r.p.m. at a specified engine speed whereas gear train 69, 70 gives a PTO shaft speed of 540 r.p.m. at the specified speed.

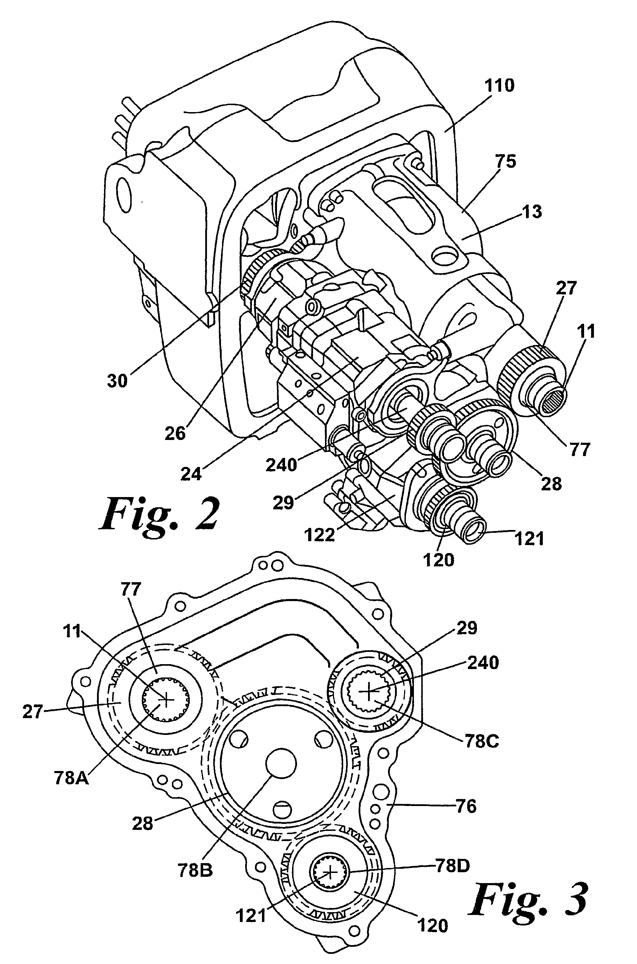

With reference to Figures 2 and 3 the transmission module 10 comprises a housing 75 which includes a universal end flange 76 at the forward end of the vehicle. The module 10 itself is housed within the chassis of a tractor 110. Input shaft 11 is supported by a bearing 77 located at one of a plurality of shaft support points 78A, 78B, 78C and 78D, provided by the universal end flange 76 which is bolted to the main housing 75.

The hydraulic pump/motor loop 24 is mounted on and driven by shaft 240. This component is added to the rest of the module 10 towards the end of the assembly line through an access hatch (not shown) provided in the chassis frame 110.

The output of the motor 26 drives gear 30 which drives the planet carrier 19.

Figure 3 shows the four shaft support points 78A, 78B, 78C and 78D on the inside surface of the universal end flange 76 serving to support shafts for gears 27, 28 and 29. From here it can be seen that shaft 240 for the pump/motor loop 24 is driven by input shaft 11 via gears 27, 28 and 29 all supported by the universal end flange 76. Gear 27 has a width, or thickness, that is substantially greater, for example twice the thickness, than that of gear 28 for reasons that will become apparent below.

Gear 120 is meshed with gear 28 and is drivably mounted on shaft 121 which is supported by shaft support 78D. An auxiliary hydraulic pump 122 is driven by shaft 121 and is employed to operate auxiliary hydraulic functions of the tractor.

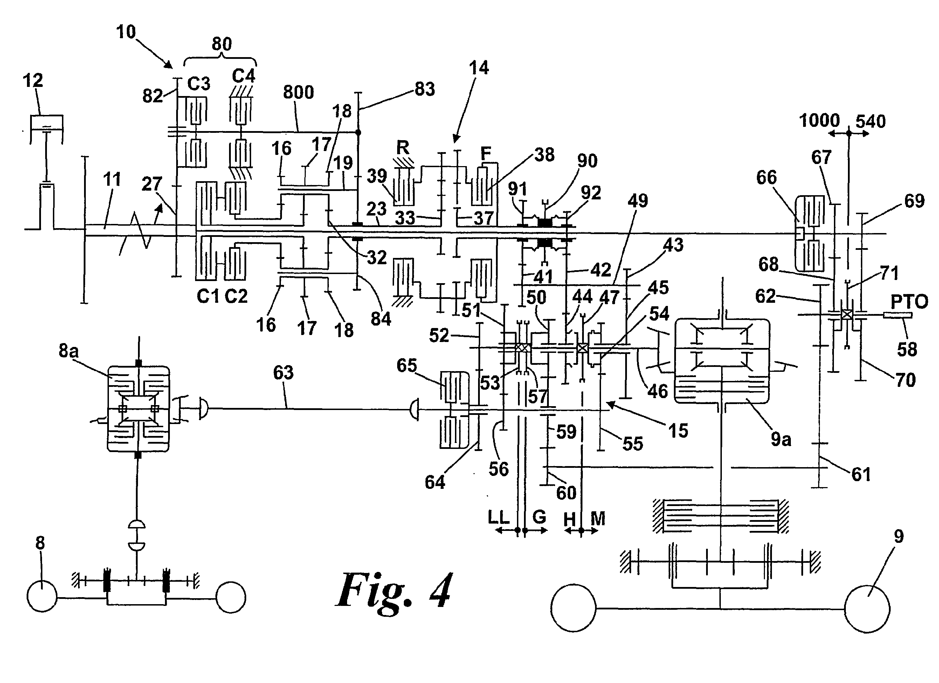

The assembly of the CVT arrangement shown in Figures 1, 2 and 3 can easily be modified to instead provide a five speed multi-ratio powershift transmission of the form shown in Figures 4, 5 and 6.

As can be seen from Figure 4, the main difference from the CVT module 10 of Figures 1, 2 and 3 is that the hydraulic pump loop 24 is replaced by a mechanical gear loop 80 which drives carrier 19 from input shaft 11 via gears 27, 82, 83, and 84 using clutch C3 and which holds the carrier 19 stationary using clutch C4.

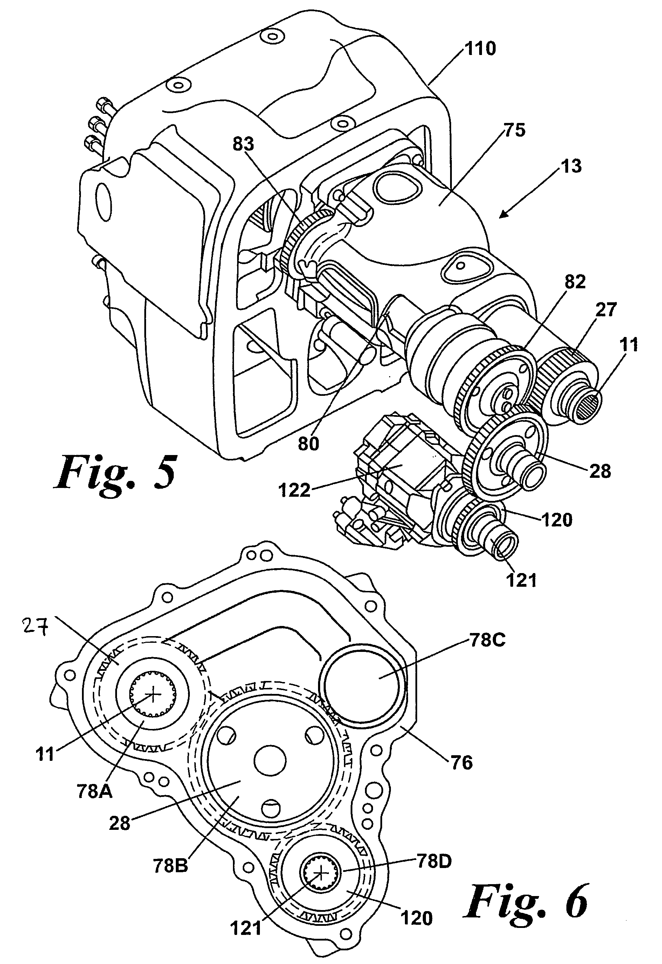

The universal end flange 76 is selectively configurable to both the CVT and powershift transmission arrangements. In the latter arrangement the mechanical gear loop 80 is mounted on shaft 800 which is driven by gear 82. As can be seen from Figure 5, gear 82 meshes with gear 27 and overlaps with gear 28 which remains in place to drive the hydraulic pump 122 (common to both arrangements). Thus shaft support 78C is left redundant in this arrangement (Fig. 6).

The position of the input shaft 11 is common to both arrangements shown in Figures 2 and 5. Furthermore, gear 27 is a common component in both arrangements wherein a proportion of the thickness thereof is redundant in the CVT arrangement.

By providing an end flange 76 which can accommodate a number of different shaft support configurations, the same component can be employed regardless of the final drive line required, and thereby allows a common assembly process for more parts of the transmission.

Although a universal end flange 76 has been used in the embodiments described thus far, it should be appreciated that a flange tailored for the desired arrangement could instead be used without deviating from the scope of the invention. Furthermore, a universal end flange could instead comprise a plurality of shaft support points which are not common to both arrangements.

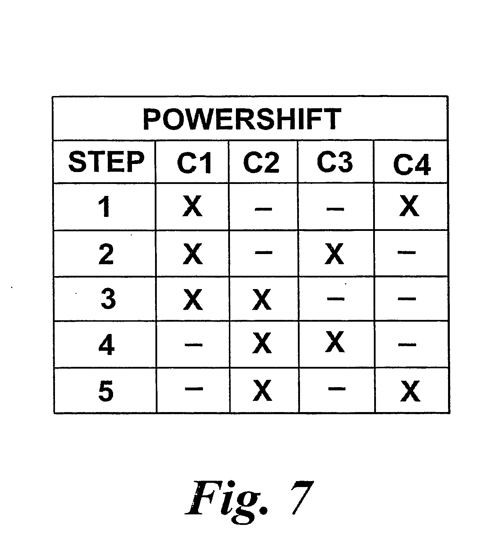

Turning back to the multi-ratio powershift transmission of Figures 4, 5 and 6, Figure 7 shows in tabular form the engagement sequence of the clutches C1, C2, C3 and C4 which gives the five ratios of the powershift provided by the epicyclic 13 and gear loop 80. Thus to engage the first ratio clutches C1 and C4 are actuated and to engage the second ration clutches C1 and C3 are actuated. The third ratio is engaged by actuating clutches C1 and C2 and the fourth ratio is engaged by actuating clutches C2 and C3. The fifth ratio is engaged by actuating clutches C2 and C4.

Also additional sliding coupler 90 is provided so that shaft 49 can be driven either via gears 91 and 41 or via gears 92 and 42 thus doubling the number of ratios which the further gear train 15 can provide.

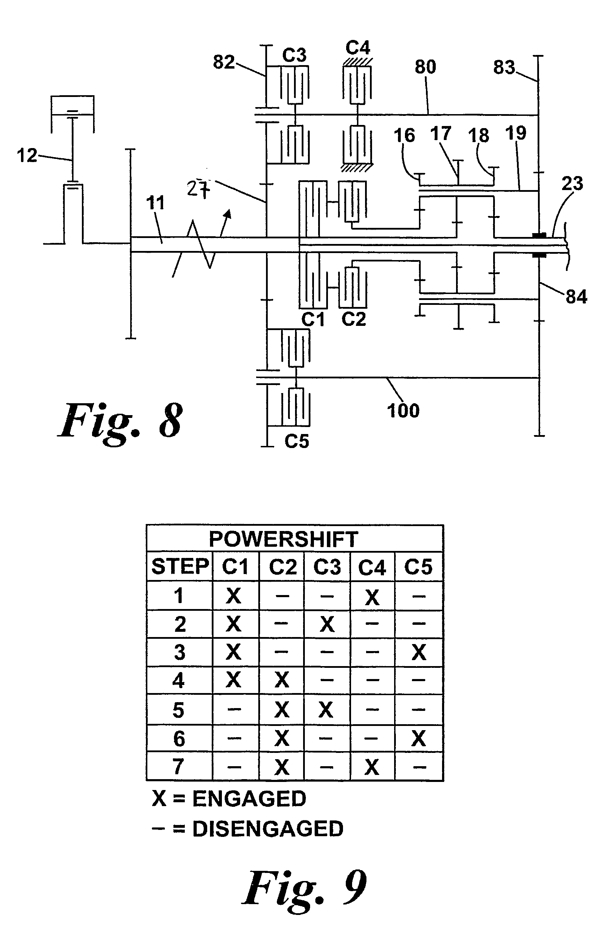

Figure 8 shows a further form of powershift transmission in which the five speed epicyclic unit of Figure 4 is replaced by a seven speed epicyclic unit by the addition of a further mechanical loop 100 extending between the input shaft 11 and the planet carrier 19 which includes an additional clutch C5. Figure 9 shows in tabular form the engagement sequence of clutches C1, C2, C3, C4 and C5 which provides the seven ratios of the epicyclic powershift unit.

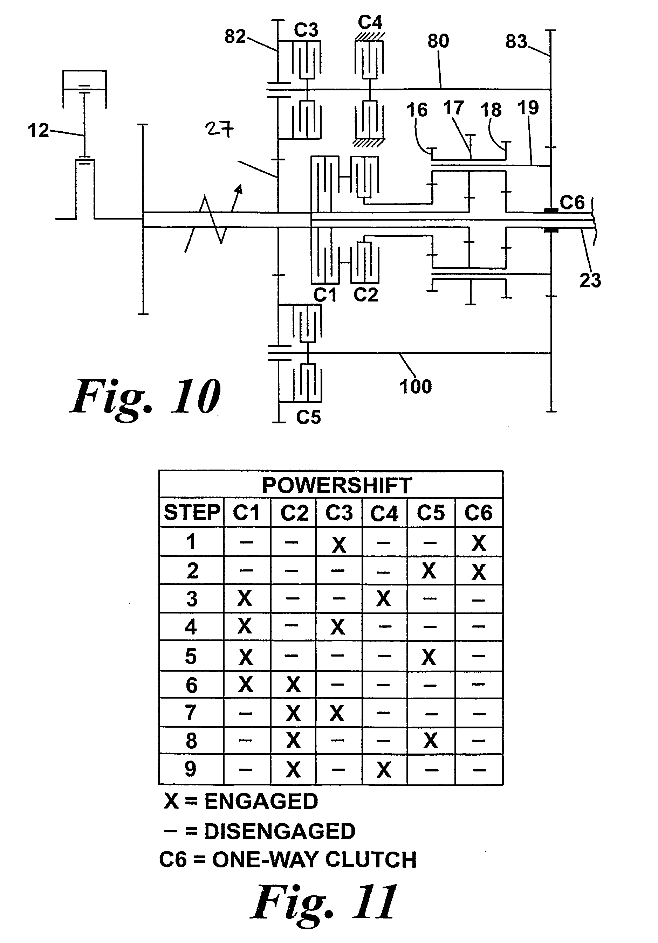

A still further form of powershift transmission is shown in Figure 10 where a one-way clutch C6 is added between the planet carrier 19 and the output shaft 23. In this arrangement when clutch C3 is engaged the output shaft 23 can be driven via gear loop 80 by clutch C6 and similarly when clutch C5 is engaged the output shaft can be driven via gear loop 100 by clutch C6 to provide a nine speed epicyclic unit. Figure 11 shows in tabular form the engagement sequence of all the clutches C1 to C6 to provide the nine ratios.

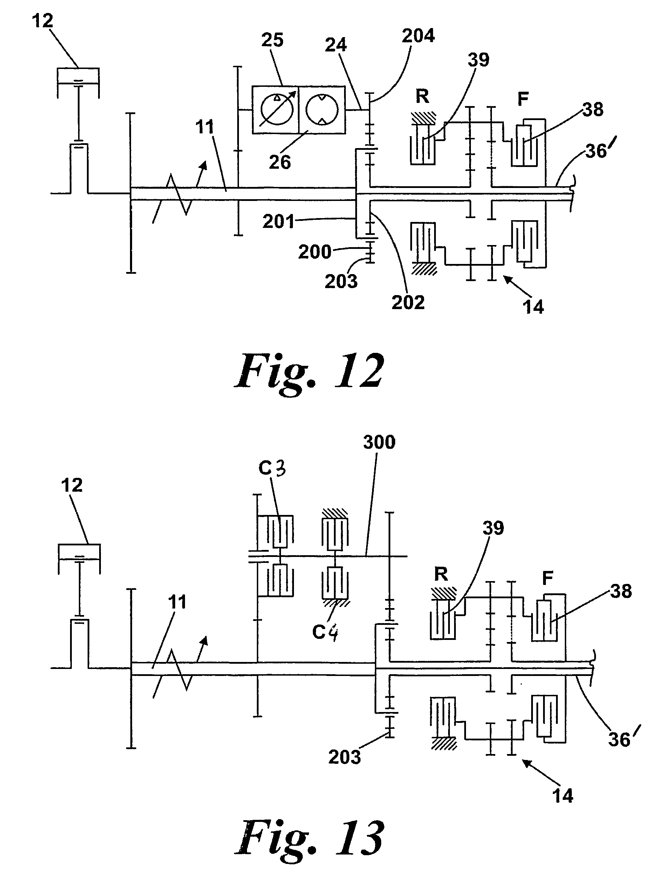

The concept of a modular transmission which can be assembled into alternative drive lines is applicable to other types of epicyclic gears. For example, the epicyclic CVT unit 10 of Figure 1 which uses the compound planet gears 16, 17 and 18 can be replaced with a CVT in the form of a sun, planet and annulus gear as shown in Figure 12 in which planet gears 200 are carried on a carrier 201 which is driven from input shaft 11. Planets 200 mesh with a sun gear 202 which drives output shaft 23 and also mesh with an annulus gear 203 which is driven from motor 26 via gear 204.

The CVT arrangement shown in Figure 12 can be converted to the powershift arrangement shown in Figure 13 by replacing the pump and motor loop 24 by the gear loop 300 which includes a clutch C3 which when engaged drive annulus gear 203 to provide a first ratio and a clutch C4 which when alternatively engaged holds the annulus gear 203 stationary to provide a second ratio. The remainder of the transmission is described in relation to Figure 1.

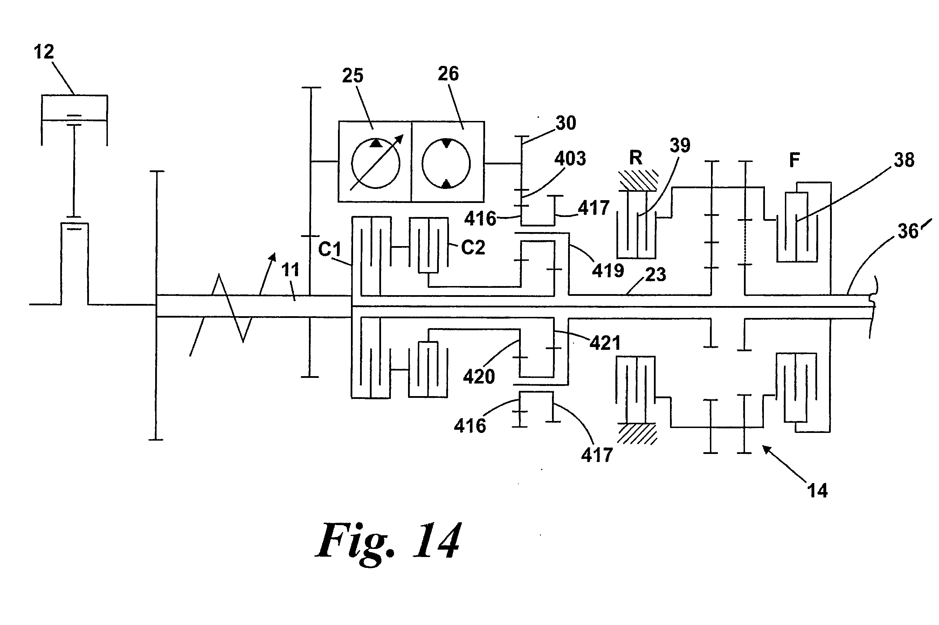

With reference to Figure 14, a further alternative epicyclic gearing arrangement is shown for a CVT. In a similar manner to the embodiment of Figure 1 the transmission comprises two hydraulically operated clutches C1 C2 which are alternatively engageable to drive input planets 416, 417 via their respective sun 420, 421 from the input shaft 11. However, in this embodiment the output shaft 23 is drivably connected to the planet carrier 419. Gear 30, driven by the continuously variable connection 25, 26, meshes with an annulus (or ring) gear 403 which in turn meshes with the planet gears.

In a like manner to the CVT arrangement of Figure 12, the CVT of Figure 14 can be converted to a powershift arrangement by replacing the pump and motor loop 24 by a suitable gear loop.

Thus it will be appreciated that the modular transmission described above allows a tractor manufacturer to provide to his customers with either a CVT as shown, for example, in Figure 1, or a five speed powershift transmission as shown in Figure 4, or seven speed powershift as shown in Figure 8, or a nine speed powershift as shown in Figure 10 which have a high percentage of common components. Similarly the epicyclic CVT of Figure 12 can be modified into the powershift transmission for Figure 13.

Also, when the transmission is configured as a CVT it is possible to provide a high torque mode of operation wherein the continuously variable connection is locked out so that shafts 11 and 23 rotate in unison. Such a mode provides a highly efficient driveline which is particularly suitable for high torque applications such as ploughing. By locking together two elements of the epicyclic a direct 1:1 relationship is established between the input shaft 11 and the output shaft 23.

The provision of two clutches, which are otherwise alternatively engageable to drive respective input planets via their respective sun from the input shaft, allows a simple route to locking two epicyclic elements together to provide the high torque mode. For example, the clutches C1 and C2 in the embodiments of Figures 1 and 14 can be simply engaged simultaneously whilst allowing the pump/motor loop 24 to rotate freely. When in the high torque mode the drive can be transmitted from output shaft 23 via gears 48, 41, 43, 45 to shaft 46 and hence to the wheels. Alternatively, road use could be catered for by transmitting drive from shaft 23 via gears 48, 41, 42, 44 to shaft 46.

The continuously variable connection can be allowed to rotate freely by a number of methods. For example, in the case of a variable hydraulic pump/motor circuits as shown in Figures 1 and 14, an open bypass valve can be provided. This serves to open the hydraulic connection between the pressure lines connecting the pump 25 and motor 26.

Alternatively, in the case of a closed loop control system controlling the speed of the hydraulic motor 26, the motor can be made to rotate with the same speed as the locked epicyclic. This results in no power being driven through the hydraulic variator circuit 24. If the pump/motor loop 24 is torque controlled, the control request can be set to zero which results in no load on the shaft 240.

On the assembly line, a tractor manufacturer can assemble a transmission module as described and stockpile a quantity of them as desired before configuring each of the modules one-by-one into either a CVT arrangement or a powershift transmission arrangement. Advantageously this reduces the time between a customer placing an order for a tractor with a desired transmission and delivery of that tractor.

## Claims

1. A vehicle transmission having the following elements:-
an inputs shaft (11);
an epicyclic gear (13) having three compound planets (16,17,18) which co-rotate in unison at all times, two planets (16,17) acting as inputs to the epicyclic gear and engaging respective sun gears (20,21) on the input shaft and the third planet (18) acting as an output and engaging a respective sun gear (22) on an output shaft (23) of the epicyclic gear;
two hydraulically operated clutches (C₁,C₂) which are alternatively engageable to drive the input planets via their respective sun gear from the input shaft, and
a continuously variable drive connection (24) between a carrier (19) for the planets and the input shaft, said connection driving the carrier from the input shaft in a continuously variable manner to provide a continuously variable transmission.

2. A transmission according to claim 1 in which the output shaft of the epicyclic gear is connected with a forward/reverse shuttle stage (14) of the transmission in which forward or reverse drive is selected by hydraulically operated forward and reverse drive clutches (38,39).

3. A transmission according to claim 2 in which further selectively engageable gear trains (15) are driven from the forward/reverse shuttle stage of the transmission.

4. A transmission according to claim 3 in which the further selectively engageable gear trains (15) provide two ratios high and low.

5. A transmission according to claim 4 in which the further selectively engageable gear trains provide a further even lower ratio.

6. A transmission according to any one of claims 1 to 5 in which a capability is provided to drive a power-take off shaft (58) of the vehicle at a speed proportional to the ground speed of the vehicle.

7. A transmission according to claim 6 in which the power take-off shaft may also be driven directly from the input shaft via a power take-off clutch (66) and gear trains which drive the power take-off shaft at the industry standard 1000rpm or 540rpm.

8. A transmission according to any one of claims 3 to 5 in which the further selectively engageable gear trains (15) drive a rear axle of the vehicle and also drive a front axle of the vehicle via a front wheel drive clutch (65).

9. A transmission according to any one of claims 1 to 8 in which the continuously variable drive connection between the input shaft and the carrier is a variable hydraulic pump/motor circuit.

10. A transmission according to any one of claims 1 to 8 in which the continuously variable drive connection between the input shaft and the carrier is a variable ratio mechanical drive.

11. A transmission according to any one of claims 1 to 8 in which the continuously variable drive connection between the input shaft and the carrier is a variable ratio electrical generator/motor combination.

12. A tansmission according to any preceding claim, further comprising a first gear (27) which is drivably mounted on the input shaft, and a second gear (28) meshed with the first gear, the second gear having a width that is less than that of the first gear and wherein the continuously variable drive connection is driven by a third gear (29) which is meshed with said second gear.

13. A transmission according to any preceding claim having a high-torque mode of operation in which said two hydraulically operated clutches are simultaneously engaged and the continuously variable drive connection is allowed to rotate freely.

## Patentansprüche

1. Fahrzeuggetriebe mit folgenden Elementen:
einer Eingangswelle (11);
einem Planetengetriebe (13) mit drei Planetenkörpern (16, 17, 18), die ständig gemeinsam rotieren, wobei zwei Planeten (16, 17) als Eingänge des Planetengetriebes wirken und in zugeordnete Sonnenräder (20, 21) der Eingangswelle eingreifen und der dritte Planet (18) als Ausgang wirkt und in ein zugeordnetes Sonnenrad (22) auf einer Ausgangswelle (23) des Planetengetriebes eingreift;
zwei hydraulisch betriebene Kupplungen (C₁, C₂), welche alternativ einkuppelbar sind zum Antrieb der Eingangsplaneten von der Eingangswelle über deren zugeordnetes Sonnenrad, und
einer stufenlos veränderbaren Antriebsverbindung (24) zwischen einem Träger oder Steg (19) für die Planeten und der Eingangswelle, wobei die Antriebsverbindung den Träger oder Steg von der Eingangswelle stufenlos veränderbar antreibt zur Bereitstellung eines stufenlos veränderbaren Getriebes.

2. Getriebe nach Anspruch 1, **dadurch gekennzeichnet, dass** die Ausgangswelle des Planetengetriebes mit einer Vorwärts-/Rückwärts-Stufe (14; engl.: "shuttle stage") des Getriebes verbunden ist, in welcher durch eine hydraulisch betriebene Vorwärts-Kupplung und Rückwärts-Kupplung (38, 39) ein Vorwärtsantrieb oder Rückwärtsantrieb gewählt wird.

3. Getriebe nach Anspruch 2, **dadurch gekennzeichnet, dass** selektiv zur Wirkung bringbare oder einkuppelbare Getriebestufen oder -ketten (15) von der Vorwärts-/Rückwärts-Stufe des Getriebes angetrieben sind.

4. Getriebe nach Anspruch 3, **dadurch gekennzeichnet, dass** die weiteren selektiv zur Wirkung bringbaren oder einkuppelbaren Getriebestufen oder -ketten (15) zwei Übersetzungen "hoch" und "niedrig" gewährleisten.

5. Getriebe nach Anspruch 4, **dadurch gekennzeichnet, dass** die weiteren selektiv zur Wirkung bringbaren oder einkuppelbaren Getriebestufen eine weitere noch niedrigere Übersetzung gewährleisten.

6. Getriebe nach einem der Ansprüche 1 bis 5, **dadurch gekennzeichnet, dass** ermöglicht ist, dass eine Leistungsabnahme-Welle (58) des Fahrzeugs mit einer Geschwindigkeit angetrieben wird, die proportional zu der Geschwindigkeit des Fahrzeugs über dem Boden ist.

7. Getriebe nach Anspruch 6, **dadurch gekennzeichnet, dass** die Leistungsabnahme-Welle auch direkt von der Eingangswelle über eine Leistungsabnahme-Kupplung (66) und Getriebestufen oder -ketten, die die Leistungsabnahme-Welle bei dem industriellen Standard von 1000 U/min oder 540 U/min antreiben, angetrieben werden kann.

8. Getriebe nach einem der Ansprüche 3 bis 5, **dadurch gekennzeichnet, dass** die weiteren selektiv einkuppelbaren Getriebestufen oder -ketten (15) eine Hinterachse des Fahrzeugs antreiben und auch über eine Vorderrad-Antriebskupplung (65) eine Vorderachse des Fahrzeugs antreiben.

9. Getriebe nach einem der Ansprüche 1 bis 8, **dadurch gekennzeichnet, dass** die stufenlos veränderbare Antriebsverbindung zwischen der Eingangswelle und dem Steg oder Träger ein veränderbarer hydraulischer Pumpen-Motor-Kreislauf ist.

10. Getriebe nach einem der Ansprüche 1 bis 8, **dadurch gekennzeichnet, dass** die stufenlos veränderbare Antriebsverbindung zwischen der Eingangswelle und dem Steg oder Träger ein mechanischer Antrieb mit veränderbarer Übersetzung ist.

11. Getriebe nach einem der Ansprüche 1 bis 8, **dadurch gekennzeichnet, dass** die stufenlos veränderbare Antriebsverbindung zwischen der Eingangswelle und dem Träger oder Steg eine elektrische Generator/Motor-Kombination mit veränderbarer Übersetzung ist.

12. Getriebe nach einem der vorhergehenden Ansprüche, **dadurch gekennzeichnet, dass** ein erstes Getrieberad (27), welches antreibbar mit der Eingangswelle montiert ist, sowie ein zweites Getrieberad (28), welches mit dem ersten Getrieberad kämmt, vorgesehen sind, wobei das zweite Getrieberad eine Breite besitzt, die kleiner als die des ersten Getrieberads, und die stufenlos veränderbare Antriebsverbindung angetrieben wird von einem dritten Getrieberad (29), welches mit dem zweiten Getrieberad kämmt.

13. Getriebe nach einem der vorhergehenden Ansprüche, **dadurch gekennzeichnet, dass** dieses einen Betriebsmodus mit hohem Moment besitzt, in welchem zwei hydraulisch betriebene Kupplungen simultan in Eingriff gebracht werden, wobei ermöglicht ist, dass die stufenlos veränderbare Antriebsverbindung frei rotieren kann.

## Revendications

1. Transmission de véhicule comportant les éléments suivant :
un arbre d'entrée (11);
un train épicycloïdal (13) comportant trois satellites composés (16, 17, 18) qui, à tout instant, tournent ensemble à l'unisson, deux satellites (16, 17) servant en tant qu'entrées du train épicycloïdal et engrenant sur des engrenage solaires respectifs (20, 21) sur l'arbre d'entrée et le troisième satellite (18) servant de sortie et engrenant sur un engrenage solaire (22) respectif sur un arbre de sortie (23) du train épicycloïdal ;
deux embrayages commandés de manière hydraulique (C1, C2) qui peuvent être couplés en alternance afin d'entraîner les satellites d'entrée par l'intermédiaire de leur engrenage solaire respectif à partir de l'arbre d'entrée, et
une liaison d'entraînement continûment variable (24) entre un support (19) pour les satellites et l'arbre d'entrée, ladite liaison entraînant le support à partir de l'arbre d'entrée d'une manière continûment variable afin d'assurer une transmission continûment variable.

2. Transmission selon la revendication 1, dans laquelle l'arbre de sortie du train épicycloïdal est couplé à un étage de coulisseau de marche avant/arrière (14) de la transmission dans laquelle la marche avant ou arrière est sélectionnée par des embrayages de marche avant et arrière commandés de manière hydraulique (38, 39).

3. Transmission selon la revendication 2, dans laquelle d'autres trains d'engrenage pouvant être couplés de manière sélective (15) sont entraînés à partir de l'étage de coulisseau de marche avant/arrière de la transmission.

4. Transmission selon la revendication 3, dans laquelle les autres trains d'engrenage pouvant être couplés de manière sélective (15) assurent deux rapports haut et bas.

5. Transmission selon la revendication 4, dans laquelle les autres trains d'engrenage pouvant être couplés de manière sélective assurent un autre rapport plus faible régulier.

6. Transmission selon l'une quelconque des revendications 1 à 5, dans laquelle il est assuré une possibilité d'entraîner un arbre de prise de couple (58) du véhicule à une vitesse proportionnelle à la vitesse au sol du véhicule.

7. Transmission selon la revendication 6, dans laquelle l'arbre de prise de couple peut aussi être entraîné directement à partir de l'arbre d'entrée par l'intermédiaire
d'un embrayage de prise de couple (66) et des trains d'engrenage qui entraînent l'arbre de prise de couple au standard industriel de 1000 t/mn ou de 540 t/mn.

8. Transmission selon l'une quelconque des revendications 3 à 5, dans laquelle les autres trains d'engrenage pouvant être couplées de manière sélective (15) entraînent un axe arrière du véhicule et entraînent aussi un axe avant du véhicule par l'intermédiaire d'un embrayage d'entraînement de roue avant (65).

9. Transmission selon l'une quelconque des revendications 1 à 8, dans laquelle la liaison d'entraînement continûment variable entre l'arbre d'entrée et le support est un circuit à pompe/moteur hydraulique variable.

10. Transmission selon l'une quelconque des revendications 1 à 8, dans laquelle la liaison d'entraînement continûment variable entre l'arbre d'entrée et le support est un dispositif d'entraînement mécanique à rapport variable.

11. Transmission selon l'une quelconque des revendications 1 à 8, dans laquelle la liaison d'entraînement continûment variable entre l'arbre d'entrée et le support est une association générateur/moteur électrique à rapport variable.

12. Transmission selon l'une quelconque des revendications précédentes, comprenant, en outre, un premier engrenage (27) qui est monté de manière à pouvoir être entraîné sur l'arbre d'entrée, et un deuxième engrenage (28) engrenant avec le premier engrenage, le deuxième engrenage présentant une largeur qui est inférieure à celle du premier engrenage et dans laquelle la liaison d'entraînement continûment variable est entraînée par un troisième engrenage (29) qui engrène avec ledit deuxième engrenage.

13. Transmission selon l'une quelconque des revendications précédentes, présentant un mode de fonctionnement à couple élevé dans lequel deux embrayages commandés de manière hydraulique sont couplés simultanément et la liaison d'entraînement continûment variable est amenée à tourner librement.
